# EUROPÄISCHE PATENTANMELDUNG

(11) **EP 4 345 411 A1**
(43) Veröffentlichungstag der Anmeldung: **03.04.2024**
(21) Anmeldenummer: 22199132.6
(22) Anmeldetag: 30.09.2022
(51) Int. Cl.: G01B 11/00, G01B 11/24

(54) **VERMESSUNG VON HALDEN**

(71) Anmelder: Siemens Aktiengesellschaft, 80333 München (DE)
(72) Erfinder: Roßberg, Michael, 04318 Leipzig (DE)
(74) Vertreter: Siemens Patent Attorneys

(57) **Zusammenfassung**

Die Erfindung betrifft ein Verfahren, ein Messsystem, ein Computerprogramm sowie ein Computerprogrammprodukt zum Vermessen von Halden. Um die Vermessung von Halden gegenüber dem Stand der Technik zu verbessern, wird ein Verfahren zum Vermessen einer Halde vorgeschlagen, wobei zumindest ein Scanner zumindest einen Referenzpunkt zumindest eines Referenzkörpers erfasst, wobei für den zumindest einen Scanner anhand des zumindest einen erfassten Referenzpunktes zumindest eine Scanner-Position und eine Scanner-Ausrichtung ermittelt wird, wobei Scan-Daten von der Halde von dem zumindest einen Scanner erfasst werden und wobei anhand der Scan-Daten zumindest die Position und das Volumen der Halde ermittelt werden. Die Aufgabe wird weiter gelöst durch ein Messsystem zum Vermessen einer Halde, umfassend zumindest eine Recheneinheit, zumindest einen Scanner und zumindest einen Referenzkörper, der zumindest einen Referenzpunkt aufweist, wobei zumindest ein Referenzpunkt von zumindest einem Scanner erfassbar ist, wobei anhand des zumindest einen Referenzpunktes für den zumindest einen Scanner in der Recheneinheit zumindest eine Scanner-Position und eine Scanner-Ausrichtung ermittelbar sind, wobei Scan-Daten von der Halde von dem zumindest einen Scanner erfassbar sind und wobei anhand der Scan-Daten zumindest die Position und das Volumen der Halde in der Recheneinheit ermittelbar sind. Mit der erfindungsgemäßen Lösung kann die Scanner-Position und die Scanner-Ausrichtung mithilfe einer Software bestimmt werden, ohne einen Vermesser zu benötigen. Dadurch wird die Vermessung der Halde einfacher und günstiger.

## Beschreibung

Die Erfindung betrifft ein Verfahren, ein Messsystem, ein Computerprogramm sowie ein Computerprogrammprodukt zum Vermessen von Halden.

Vermessungen von Halden kommen insbesondere auf dem Gebiet des Bergbaus, aber auch beispielsweise beim Be- und/oder Entladen von z.B. Schiffen zum Einsatz. Zum Vermessen von Körpern - wie beispielsweise einer (Schüttgut-) Halde - muss grundsätzlich die (Anbau-) Position und Ausrichtung des Scanners genau bekannt sein. Hierzu sind mittlerweile auch Drohnensysteme bekannt, die ihre Position über GPS bestimmen.

Bei terrestrischen Systemen sieht der aktuelle Prozess zur Bestimmung von Position und Ausrichtung eines Scanners üblicherweise folgendermaßen aus:
1. Bestimmung der Scanner-Position durch Vermesser oder per Hand,
2. Bestimmung der Ausrichtung des Scanners,
3a. Anbau eines Inklinometers oder
3b. Aufzeichnung von Scan-Daten, manuelle Berechnung der Scanner-Ausrichtung und erneute Aufzeichnung von Scan-Daten zur Verifikation der berechneten Parameter.

Der Erfindung liegt die Aufgabe zugrunde, die Vermessung von Halden gegenüber dem Stand der Technik zu verbessern.

Diese Aufgabe wird gelöst durch ein Verfahren zum Vermessen einer Halde, wobei zumindest ein Scanner zumindest einen Referenzpunkt zumindest eines Referenzkörpers erfasst, wobei für den zumindest einen Scanner anhand des zumindest einen erfassten Referenzpunktes zumindest eine Scanner-Position und eine Scanner-Ausrichtung ermittelt wird, wobei Scan-Daten von der Halde von dem zumindest einen Scanner erfasst werden und wobei anhand der Scan-Daten zumindest die Position und das Volumen der Halde ermittelt werden.

Die Aufgabe wird weiter gelöst durch ein Messsystem zum Vermessen einer Halde, umfassend zumindest eine Recheneinheit, zumindest einen Scanner und zumindest einen Referenzkörper, der zumindest einen Referenzpunkt aufweist, wobei zumindest ein Referenzpunkt von zumindest einem Scanner erfassbar ist, wobei anhand des zumindest einen Referenzpunktes für den zumindest einen Scanner in der Recheneinheit zumindest eine Scanner-Position und eine Scanner-Ausrichtung ermittelbar sind, wobei Scan-Daten von der Halde von dem zumindest einen Scanner erfassbar sind und wobei anhand der Scan-Daten zumindest die Position und das Volumen der Halde in der Recheneinheit ermittelbar sind.

Die Aufgabe wird weiter gelöst durch ein Computerprogramm und ein Computerprogrammprodukt mit den in den Ansprüchen 11 und 12 angegebenen Merkmalen.

Die Lage von charakteristischen (Referenz-) Punkten des Referenzkörpers im Raum ist durch eine Messung mit einfachen Hilfsmitteln bekannt. Als Referenzkörper können vorhandene Referenzkörper (Wand, etc.) oder extra aufgebaute Referenzkörper (Würfel mit ausreichender Größe, etc.) verwendet werden, die durch den Scanner vermessen werden. Eine Software bestimmt dann durch Berechnungen die Position und die Ausrichtung des Scanners. Mit diesen Informationen können danach die Position und das Volumen der Halde sehr genau vermessen werden. Es ist klar, dass hierzu je nach Sichtbarkeit der Halde von der oder den jeweiligen Scanner-Position oder -Positionen auch mehrere Scanner und/oder Referenzkörper eingesetzt werden können. Die vorhandenen Möglichkeiten hängen natürlich immer vom jeweiligen Einsatz im Einzelfall ab. So kann, abhängig vom Schüttgut, z.B. eine vermehrte Staubentwicklung dazu führen, dass eine an sich gut geeignete Scanner-Position am Ende eines Absetzers doch durch vielleicht zwei seitlich der Halde positionierte Scanner ersetzt wird.

Mit der erfindungsgemäßen Lösung kann die Scanner-Position mithilfe einer Software bestimmt werden, ohne einen Vermesser zu benötigen. Dadurch wird die Scanner-Positionsbestimmung einfacher und günstiger. Die Ausrichtung des Scanners kann mithilfe einer Software ebenfalls deutlich einfacher und schneller bestimmt werden. Die aufwändige und fehleranfällige manuelle Berechnung entfällt, dadurch ist bei der Durchführung deutlich weniger Know-How erforderlich.

In einer vorteilhaften Form der Ausgestaltung wird als zumindest ein Scanner ein 2D- oder 3D-Laserscanner verwendet. Es sind natürlich verschiedene Arten von Scannern denkbar (optisch, akustisch ...), doch haben sich diese Laserscanner mittlerweile etabliert und sind bei hoher Qualität auch zu einem angemessenen Preis verfügbar.

In einer weiteren vorteilhaften Ausführungsform werden zumindest die Position und das Volumen der Halde an ein übergeordnetes Leitsystem übermittelt. Auf diese Weise ist das Leitsystem, das z.B. einen Absetzer steuert, über die Größe und damit ggf. die verbliebene Aufnahmefähigkeit der Halde informiert und kann entsprechend agieren.

In einer weiteren vorteilhaften Ausführungsform wird ein Profil der Halde anhand der Position und des Volumens visualisiert. Hierdurch wird einem menschlichen Bediener die Erfassung der Situation erleichtert.

In einer weiteren vorteilhaften Ausführungsform werden die Schritte der Erfassung der Scan-Daten und der Ermittlung der Position und des Volumens der Halde wiederholt ausgeführt. Bei einer entsprechend hohen "Frequenz" der Wiederholung kann gewissermaßen die Halde quasi in Echtzeit überwacht werden.

In einer weiteren vorteilhaften Ausführungsform werden die Schritte der Erfassung zumindest eines Referenzpunktes und der Ermittlung der Scanner-Position und der Scanner-Ausrichtung wiederholt ausgeführt. Auf diese Weise kann zumindest hin und wieder, insbesondere bei nicht ganz ortsfesten Scannern (wie bei Anbaupunkten an Absetzern, Baggern etc.), die Scanner-Position und Scanner-Ausrichtung neu kalibriert werden, sodass die Genauigkeit der Halden-Vermessung gleichbleibend hochgehalten werden kann.

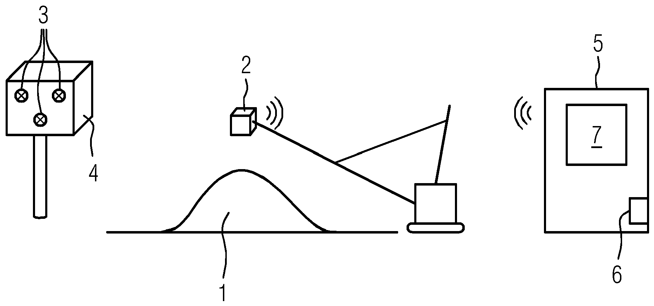

Im Folgenden wird die Erfindung anhand des in der Figur dargestellten Ausführungsbeispiels näher beschrieben und erläutert.

Die Figur zeigt eine schematische Darstellung einer Halde 1, auf der über einen Absetzer Schüttgut entladen wird. Am Ende des Absetzers ist ein Scanner 2 zur Vermessung der Halde 1 angeordnet. Zum Kalibrieren des Scanners 2, d.h. zur Bestimmung der Scanner-Position und der Scanner-Ausrichtung, werden Referenzpunkte 3 auf einem Referenzkörper 4 erfasst und daraus die Scanner-Position und die Scanner-Ausrichtung mithilfe eines Programmes, das in einer Recheneinheit 5 des Messsystems, das zumindest die Recheneinheit 5, den Scanner 2 und den Referenzkörper 4 umfasst, abläuft, ermittelt. Der Scanner 2, der vorteilhafterweise als 2D- oder 3D-Laserscanner ausgeführt ist, scannt danach die Halde 1 und übermittelt die Scan-Daten zur Ermittlung der Position und des Volumens der Halde 1 an die Recheneinheit 5. Dies kann beispielsweise, wie in der Figur dargestellt, über eine drahtlose Datenverbindung geschehen. Die Position und das Volumen der Halde 1 können von der Recheneinheit 5 bevorzugt auch über eine passende Kommunikationsschnittstelle 6 an ein übergeordnetes Leitsystem übermittelt werden. Die Recheneinheit 5 kann entweder mobil ausgeführt oder in ein anderes System integriert sein, beispielsweise in eine Steuerung des Absetzers. Mit Vorteil kann auch ein Profil der Halde 1 in einer Ausgabeeinheit 7 der Recheneinheit 5 visualisiert werden, was beispielsweise einem Bediener des Absetzers die Erfassung der Situation erleichtert.

Zusammenfassend betrifft die Erfindung ein Verfahren, ein Messsystem, ein Computerprogramm sowie ein Computerprogrammprodukt zum Vermessen von Halden. Um die Vermessung von Halden gegenüber dem Stand der Technik zu verbessern, wird ein Verfahren zum Vermessen einer Halde vorgeschlagen, wobei zumindest ein Scanner zumindest einen Referenzpunkt zumindest eines Referenzkörpers erfasst, wobei für den zumindest einen Scanner anhand des zumindest einen erfassten Referenzpunktes zumindest eine Scanner-Position und eine Scanner-Ausrichtung ermittelt wird, wobei Scan-Daten von der Halde von dem zumindest einen Scanner erfasst werden und wobei anhand der Scan-Daten zumindest die Position und das Volumen der Halde ermittelt werden. Die Aufgabe wird weiter gelöst durch ein Messsystem zum Vermessen einer Halde, umfassend zumindest eine Recheneinheit, zumindest einen Scanner und zumindest einen Referenzkörper, der zumindest einen Referenzpunkt aufweist, wobei zumindest ein Referenzpunkt von zumindest einem Scanner erfassbar ist, wobei anhand des zumindest einen Referenzpunktes für den zumindest einen Scanner in der Recheneinheit zumindest eine Scanner-Position und eine Scanner-Ausrichtung ermittelbar sind, wobei Scan-Daten von der Halde von dem zumindest einen Scanner erfassbar sind und wobei anhand der Scan-Daten zumindest die Position und das Volumen der Halde in der Recheneinheit ermittelbar sind. Mit der erfindungsgemäßen Lösung kann die Scanner-Position und die Scanner-Ausrichtung mithilfe einer Software bestimmt werden, ohne einen Vermesser zu benötigen. Dadurch wird die Vermessung der Halde einfacher und günstiger.

## Patentansprüche

1. Verfahren zum Vermessen einer Halde (1), wobei zumindest ein Scanner (2) zumindest einen Referenzpunkt (3) zumindest eines Referenzkörpers (4) erfasst, wobei für den zumindest einen Scanner (2) anhand des zumindest einen erfassten Referenzpunktes (3) zumindest eine Scanner-Position und eine Scanner-Ausrichtung ermittelt wird, wobei Scan-Daten von der Halde (1) von dem zumindest einen Scanner (2) erfasst werden und wobei anhand der Scan-Daten zumindest die Position und das Volumen der Halde (1) ermittelt werden.

2. Verfahren nach Anspruch 1,
wobei als zumindest ein Scanner (2) ein 2D- oder 3D-Laserscanner verwendet wird.

3. Verfahren nach Anspruch 1 oder 2,
wobei zumindest die Position und das Volumen der Halde (1) an ein übergeordnetes Leitsystem übermittelt werden.

4. Verfahren nach einem der vorhergehenden Ansprüche,
wobei anhand der Position und des Volumens ein Profil der Halde (1) visualisiert wird.

5. Verfahren nach einem der vorhergehenden Ansprüche,
wobei die Schritte der Erfassung der Scan-Daten und der Ermittlung der Position und des Volumens der Halde (1) wiederholt ausgeführt werden.

6. Verfahren nach einem der vorhergehenden Ansprüche,
wobei die Schritte der Erfassung zumindest eines Referenzpunktes (3) und der Ermittlung der Scanner-Position und der Scanner-Ausrichtung wiederholt ausgeführt werden.

7. Messsystem zum Vermessen einer Halde (1), umfassend zumindest eine Recheneinheit (5), zumindest einen Scanner (2) und zumindest einen Referenzkörper (4), der zumindest einen Referenzpunkt (3) aufweist, wobei zumindest ein Referenzpunkt (3) von zumindest einem Scanner (2) erfassbar ist, wobei anhand des zumindest einen Referenzpunktes (3) für den zumindest einen Scanner (2) in der Recheneinheit (5) zumindest eine Scanner-Position und eine Scanner-Ausrichtung ermittelbar sind, wobei Scan-Daten von der Halde (1) von dem zumindest einen Scanner (2) erfassbar sind und wobei anhand der Scan-Daten zumindest die Position und das Volumen der Halde (1) in der Recheneinheit (5) ermittelbar sind.

8. Messsystem nach Anspruch 7,
wobei zumindest ein Scanner (2) als 2D- oder 3D-Laserscanner ausgeführt ist.

9. Messsystem nach Anspruch 7 oder 8,
wobei zumindest die Position und das Volumen der Halde (1) über eine Kommunikationsschnittstelle (6) an ein übergeordnetes Leitsystem übermittelbar sind.

10. Messsystem nach einem der Ansprüche 7 bis 9,
wobei anhand der Position und des Volumens ein Profil der Halde (1) in einer Ausgabeeinheit (7) visualisierbar ist.

11. Computerprogramm zur Durchführung eines Verfahrens nach einem der Ansprüche 1 bis 6 bei Ablauf in einer Recheneinheit (5) eines Messsystems nach einem der Ansprüche 7 bis 10.

12. Computerprogrammprodukt mit zumindest einem Computerprogramm nach Anspruch 11.
